# EUROPÄISCHE PATENTANMELDUNG

(11) **EP 2 299 024 A2**
(43) Veröffentlichungstag der Anmeldung: **23.03.2011**
(21) Anmeldenummer: 10175983.5
(22) Anmeldetag: 09.09.2010
(51) Int. Cl.: E04F 13/08

(54) **Vorspreizbares Befestigungselement**

(30) Priorität: 15.09.2009 DE 102009029486
(71) Anmelder: EJOT Baubefestigungen GmbH, 57302 Bad Berleburg (DE)
(72) Erfinder: Knebel, Ulrich, 57319 Bad Berleburg-Berghausen (DE)
(74) Vertreter: Bardehle, Heinz

(57) **Zusammenfassung**

Die Erfindung ist gerichtet auf ein Befestigungselement (1) zur Montage eines Dämmstoffs (2) an einer Unterkonstruktion (4), welches einen Dübel (20) mit einem Druckteller (21) und einer daran anschließenden Dübelhülse (24) mit einem Dübelhülsenschaft (25) und einer Spreizzone (26) aufweist, sowie ein Spreizelement (10) mit einem Spreizelementkopf (11), einem Spreizelementschaft (12) und einer Spreizelementspitze (17). Das Spreizelement (12) weist einen ersten Schaftteil (13) mit einem Durchmesser D1 auf, welcher in einen zweiten Schaftteil (14) mit einem kleineren Durchmesser D2 übergeht an welchen sich die Spreizelementspitze (17) anschließt. Im Vormontagezustand des Befestigungselements (1) wirkt der zweite Schaftteil (14) so mit der Spreizzone (26) zusammen, dass eine axiale Vorfixierung der Dübelhülse (24) erzielt wird.

## Beschreibung

Die vorliegende Erfindung betrifft ein vorspreizbares Befestigungselement welches insbesondere für die Montage von Wärmedämm-Verbundsystemen (WDVS) geeignet ist.

Gerade bei WDVS-Tellerdübeln tritt oftmals das Problem auf, dass die Dübelteller beim Einschlagen zu tief in den Dämmstoff eingezogen werden. Dieses Phänomen tritt unter anderem dann auf, wenn das Spreizelement beim Einschlagen vor der nach innen im Querschnitt verjüngten Spreizzone steht und derart blockiert wird, dass beim weitern Einschlagen der Dübel nach vorne rutscht. Ein kleiner Querschnitt in der Dübelspreizzone ist allerdings an dieser Position erwünscht, um den notwendigen Spreizdruck, speziell im ersten Kammersteg eines Hochziegels, zu erhalten.

Der vorstehend beschriebene Rutscheffekt kann abgemildert werden, indem man oberhalb der Setzposition bzw. im oberen Bereich der Spreizzone eine "Vorspreizung" der Dübelhülse vorsieht, um diese axial zu fixieren. Dadurch kann der Spreiznagel dann auch in den engeren Querschnittsbereich der Spreizzone eingeschlagen werden, ohne dass diese axial weiter nach vorne rutscht.

In der DE 23 05 528 8 C2 wird ein Kunststoffdübel zum Verbinden einer Dämmstoffplatte aus nachgiebigem Material mit einem Blechanbauteil einer Gebäudekonstruktion, wie beispielsweise einem Flachdach, beschrieben. Der Hohlschaft des Dübels weist einen Hohlraum mit zwei Bereichen unterschiedlichen Querschnitts auf. Der verengte Bereich geht dabei über einen kurzen konischen Mittelbereich in den haltescheibenseitigen Bereich über. Der Spreizstift weist ein außerdem ein konisches Stiftende auf. Die obige Konfiguration des Hohlraums bzw. Hohlschafts dient dazu, dass während der Montage ein Wulst gebildet wird, der sich außen und innen über den Rand des Bohrlochs im Blechteil legt. Durch diese Verformung wird der Kunststoffdübel einmal gehalten und zugleich auch das Bohrloch im Blechanbauteil vollständig abgedichtet.

Die DE 32 21 917 C1 beschreibt einen Dübel zur Befestigung von Isolierplatten mit einem Halteteller und einem Hohlschaft für einen Spreiznagel. Der Hohlschaft weist dabei einen sich durch die Isolierplatten erstreckenden Überbrückungsbereich auf sowie einen in den Untergrund hineinragenden Einsteck- bzw. Spreizbereich mit einem Schlitz und mit einer nach innen verengten Kernbohrung. Der Spreiznagel weist eine Spitze auf. Hierdurch soll der sog. "Matratzeneffekt" vermieden werden, wonach bei herkömmlichen Dübeln während des Einschlagens des Nagels der Halteteller in das Isolier- oder Dämmmaterial eingedrückt wird, so dass an dieser Stelle eine unerwünschte Einbuchtung vorhanden ist bzw. die Dübelhülse 1 im Bohrloch verrutscht. Durch die stufige Dübelhülse wird im Isolierplattenmaterial eine Ausbuchtung gebildet, die das Nachrutschen der Dübelhülse im Bohrloch verhindert.

Es ist daher die Aufgabe der vorliegenden Erfindung ein Befestigungselement bereitzustellen, dessen Komponenten so aufeinander abgestimmt sind, dass bei der Montage zunächst durch eine Vorspreizung der Spreizzone das Befestigungselement vorfixiert wird, um ein Nachrutschen des Befestigungselements zu verhindern, wenn das Spreizelement eingeschlagen wird und anschließend trotzdem noch der maximale Spreizdruck am Anfang der Spreizzone aufgebracht werden kann.

Diese Aufgabe wird erfindungsgemäß gelöst durch ein Befestigungselement zur Montage eines Dämmstoffs an einer Unterkonstruktion, welches einen Dübel mit einem Druckteller und einer daran anschließenden Dübelhülse mit einem Dübelhülsenschaft und einer Spreizzone aufweist, sowie ein Spreizelement mit einem Spreizelementkopf, einem Spreizelementschaft und einer Spreizelementspitze, wobei das Spreizelement einen ersten Schaftteil mit einem Durchmesser D1 aufweist, welcher in einen zweiten Schaftteil mit einem kleineren Durchmesser D2 übergeht an welchen sich die Spreizelementspitze anschließt, wobei im Vormontagezustand des Befestigungselements der zweite Schaftteil so mit der Spreizzone zusammenwirkt, dass eine axiale Vorfixierung der Dübelhülse erzielt wird, sowie durch ein Verfahren zur Montage eines Dämmstoffs an einer Unterkonstruktion mit einem Befestigungselement nach Anspruch 1, welches die folgenden Schritte aufweist: (a) Bohren eines Bohrlochs durch den Dämmstoff und in die Unterkonstruktion, (b) Einstecken des Befestigungselements in das Bohrloch, bis zur Auflage des Drucktellers auf dem Dämmstoff, (c) Eintreiben des Spreizelements unter axialer Vorspreizung der Spreizzone durch den zweiten Schafteil mit dem Durchmesser D2, (d) weiteres Eintreiben des Spreizelements und maximale Aufspreizung der Spreizzone durch den ersten Schaftteil mit dem Durchmesser D1.

In einer bevorzugten Ausführungsform der Erfindung ist der Durchmesser D2 des zweiten Schaftteils 0,5- bis 0,9-mal so groß wie der Durchmesser D1 des ersten Schaftteils. In diesem Bereich kann für eine optimale Vorspreizwirkung mittels des zweiten Schaftteils gesorgt werden. Einerseits ist nämlich der Durchmesser D2 in diesem Bereich klein genug, um ein Blockieren des Spreizelements, welches beim Einschlagen vor der nach innen im Querschnitt verjüngten Spreizzone steht, zu verhindern (und damit ein Vorschieben des Dübels beim weiteren Einschlagen). Andererseits ist der Durchmesser D2 in diesem Bereich aber noch groß genug, um eine ausreichende Vorspreizwirkung bereitzustellen.

In einer weiteren bevorzugten Ausführungsform der Erfindung ist der erste Schaftteil länger als der zweite Schaftteil. In der Regel liegt das Längenverhältnis (je nach Dicke des Dämmstoffs) im Bereich von 80:1 bis 5:1. Hierdurch wird weiter sichergestellt, dass im Endmontagezustand noch die gewünschte Maximalspreizung erreicht werden kann.

In einer anderen bevorzugten Ausführungsform der Erfindung weist der erste Schaftteil einen profilierten Bereich mit geriffelter Struktur auf. Durch die geriffelte Struktur kann die Haftreibung zwischen Spreizelement und Dübelhülse herabgesetzt werden und somit wiederum dem unerwünschten Rutscheffekt entgegengewirkt werden. Die geriffelte Struktur ist in der Regel in Einführrichtung leicht konisch ausgebildet, um Widerstand gegen einen Auszug des Spreizelements zu bieten; sie kann aber auch in Form eines Gewindes vorliegen. Es sind allerdings auch andere geeignete Geometrien denkbar. Der erste Schaftteil kann aber auch glatt ausgebildet sein.

Befestigungselement nach einem der vorhergehenden Ansprüche, **dadurch gekennzeichnet, dass** zusammen der Bereich mit geriffelter Struktur des ersten Schaftteils, der zweite Schaftteil und die Spreizelementspitze in etwa so lang sind wie die Spreizzone. Hierdurch kann einerseits die erfindungsgemäße axial Vorspreizung bzw. Vorfixierung erzielt werden, andererseits aber auch noch ein maximaler Spreizdruck am Anfang der Spreizzone aufgebaut werden.

In einer weiteren bevorzugten Ausführungsform der Erfindung weist der Druckteller eine umlaufende Aussparung für einen korrespondierenden umlaufenden Vorsprung am Spreizelementkopf auf. Zudem schließt sich regelmäßig an die umlaufende Aussparung im Druckteller eine Kammer zur Aufnahme des Spreizelementkopfs an. Zudem ist der Spreizelementkopf so ausgebildet, dass er für eine gute Abdichtung des Spreizelements gegenüber Feuchtigkeit von außen sorgt. In der Regel besteht er aus Kunststoff welcher auf das hintere Ende des Spreizelementschafts aufgespritzt wird. Er kann zudem in einem mittleren Teil eine umlaufende Dichtlippe aufweisen. Es ist allerdings auch ein Spreizelement ohne Kunststoffkopf denkbar, d. h. das Spreizelement ist kürzer und sitzt vertieft in der Dübelhülse.

Anhand der folgenden Zeichnungen wird die Montage eines Dämmstoffs mittels eines erfindungsgemäßen Befestigungselements mit Dübel und Spreizelement erläutert. Es zeigen:
- Fig. 1: eine Querschnittsansicht eines erfindungsgemäßen Befestigungselements, welches zur Montage in ein Bohrloch in Dämmstoff und Unterkonstruktion eingesteckt ist im V ormontagezustand;
- Fig. 2: eine Querschnittsansicht eines erfindungsgemäßen Befestigungselements, bei dem das Spreizelement bereits ein Stück weit in die Spreizzone eingeschlagen ist;
- Fig. 3: eine Querschnittsansicht eines erfindungsgemäßen Befestigungselements, bei dem das Spreizelement vollständig in den Dübel eingeschlagen ist.

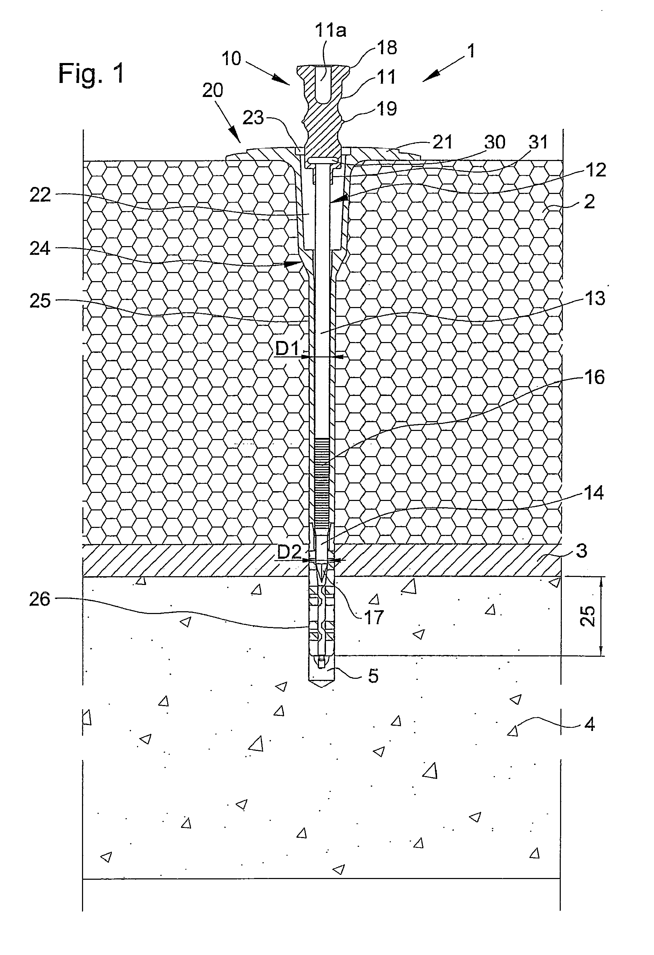

Fig. 1 zeigt das in das Bohrloch 5 zum Zwecke der Vormontage eingesteckte und vorfixierte erfindungsgemäße Befestigungselement 1. Der Druckteller 21 des Dübels 20 liegt dabei auf der Oberfläche des Dämmstoffs 2 auf. Der Schaft 25 der Dübelhülse 24 mit der Spreizzone 26 erstreckt sich durch den Dämmstoff 2 und ggf. eine Zwischenschicht 3 (z. B. aus Klebstoff oder altem Putz) hindurch in die Unterkonstruktion 4 bzw. das Mauerwerk. Das Spreizelement 10 steckt mit der Spreizelementspitze 17 und einem Teil des zweiten Schaftteils 14 in der Spreizzone 26, so dass bereits eine gewisse Vorspreizwirkung bzw. axiale Fixierung der Dübelhülse 24 in diesem Bereich vorhanden ist. Der Durchmesser D1 des ersten Schaftteils 13 ist erkennbar größer als der Durchmesser D2 des zweiten Schaftteils 14. Der untere Teil des aufgespritzten Spreizelementkopfs 11 befindet sich im Bereich der Öffnung der korrespondierenden Aufnahmekammer 22. Der Spreizelementkopf 11 kann weiterhin eine Aufnahme 11 a für ein Eintreibwerkzeug aufweisen.

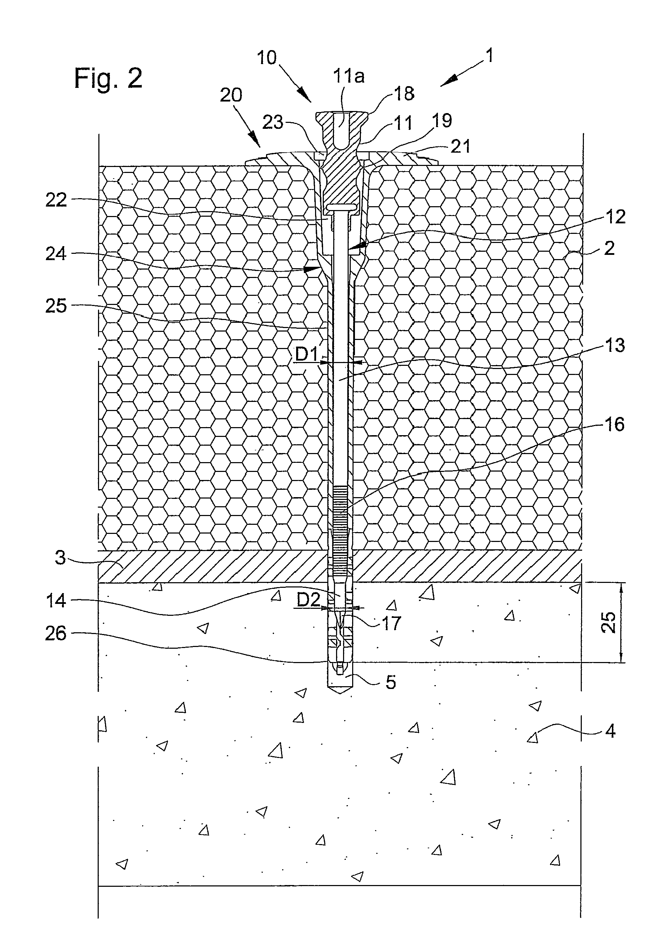

In der Fig. 2 wird das erfindungsgemäße Befestigungselement 1 zu einem etwas späteren Zeitpunkt während des Montagevorgangs gezeigt. Man erkennt, dass das Spreizelement 10 ein Stückchen weiter in den Dübel 20 eingeschlagen worden ist. Entsprechend ist der erste Schaftteil 13 nun vollständig in den oberen Teil der Spreizzone 26 eingedrungen und entfaltet dort seine volle Vorspreizwirkung. Entsprechend befindet sich der Kopf 11 des Spreizelements 10 etwa bis zur Hälfte in der Aufnahmekammer 22 des Dübels 20, wobei die umlaufende Dichtlippe 19 die Innenwand der Aufnahmekammer 22 unterhalb der umlaufenden Aussparung 23 berührt.

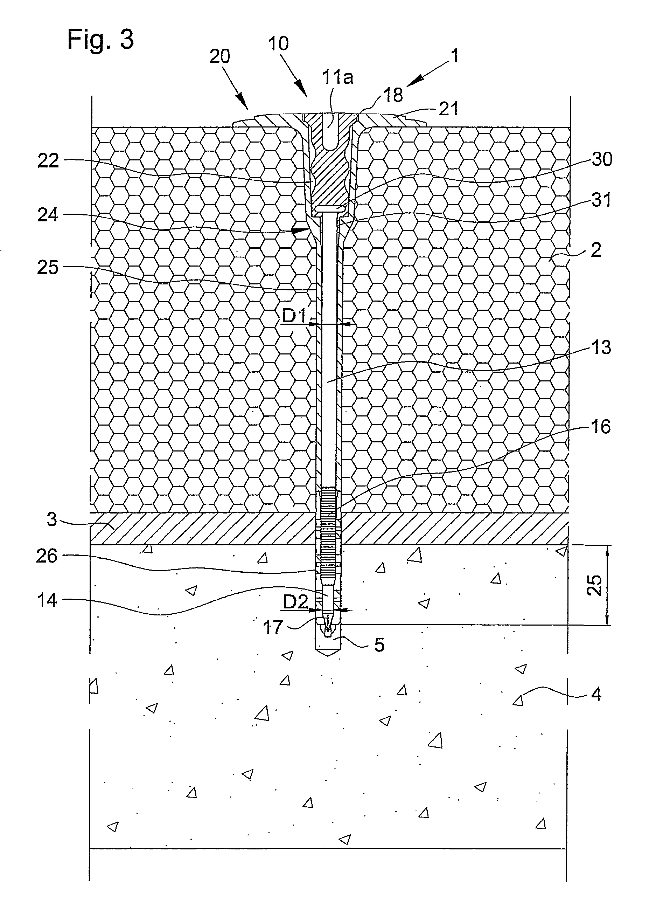

In der Fig. 3 wird das erfindungsgemäße Befestigungselement 1 zu einem noch etwas späteren Zeitpunkt während des Montagevorgangs gezeigt. Das Spreizelement 10 ist jetzt vollständig in den Dübel eingetrieben worden, so dass sein Kopf 11 die Kammer 22 vollständig ausfüllt und der umlaufende Rand 18 des Spreizelements 10 in Eingriff mit der umlaufenden Aussparung 23 des Dübels 20 ist. Die umlaufende Dichtlippe 19 liegt auf etwa halber Höhe der Kammer 22 abdichtend an deren Innenseite an, so dass keine Feuchtigkeit an den Spreizelementschaft 12 gelangen kann. Der Spreizelementkopf ist z. B. aus Kunststoff geformt und mittels eines Spritzgußverfahrens auf das obere Ende des Spreizelementschafts 12 aufgespritzt. Dabei entsteht regelmäßig ein schmaler Kunststoffrand 31, welcher den Nagelkopf 30 des Spreizelements 10 umschließt und welcher sich nun zwischen Dübelhülse 24 und Spreizelementschaf 14 befindet. Dadurch entsteht eine leichte Aufdehnung der Dübelhülse 24. Die Spreizelementspitze 17 ist am unteren Ende des Dübels 20 angelangt, so dass sich der zweite Schaftteil 14 im unteren Bereich der Spreizzone 26 befindet. Im oberen Bereich der Spreizzone ist jetzt der maximale Spreizdruck aufgebracht.

Das erfindungsgemäße Befestigungselement (1) wird in der Regel zur Einschlagmontage verwendet. Es kann aber auch für eine drehende Montage konzipiert werden, bei der der Dübel (20) bei der Montage vom rotierenden Spreizelement (oder vom Eindrehwerkzeug) mitgenommen wird. Der Dübel (20) kann dabei eine Schneidkante an der Unterseite des Drucktellers aufweisen (nicht gezeigt).

Das Montageverfahren lässt sich somit in die folgenden wesentlichen Schritte untergliedern: Zunächst Bohren eines Bohrlochs (5) durch den Dämmstoff (2) und in die Unterkonstruktion (4), dann Einstecken des Befestigungselements (1) in das Bohrloch (5), bis zur Auflage des Drucktellers (21) auf dem Dämmstoff (2), anschließendes Eintreiben des Spreizelements (10) unter axialer Vorspreizung der Spreizzone (26) durch den zweiten Schafteil (14) mit dem Durchmesser D2 sowie weiteres Eintreiben des Spreizelements (10) und maximale Aufspreizung der Spreizzone (26) durch den ersten Schaftteil (13) mit dem Durchmesser D1.

## Patentansprüche

1. Befestigungselement (1) zur Montage eines Dämmstoffes (2) an einer Unterkonstruktion (4), welches einen Dübel (20) mit einem Druckteller (21) und einer daran anschließenden Dübelhülse (24) mit einem Dübelhülsenschaft (25) und einer Spreizzone (26) aufweist, sowie ein Spreizelement (10) mit einem Spreizelementkopf (11), einem Spreizelementschaft (12) und einer Spreizelementspitze (17),
**dadurch gekennzeichnet, dass**
das Spreizelement (10) einen ersten Schaftteil (13) mit einem Durchmesser D1 aufweist, welcher in einen zweiten Schaftteil (14) mit einem kleineren Durchmesser D2 übergeht, an welchen sich die Spreizelementspitze (17) anschließt, wobei im Vormontagezustand des Befestigungselements (1) der zweite Schaftteil (14) so mit der Spreizzone (26) zusammenwirkt, dass eine axiale Vorfixierung der Dübelhülse (24) erzielt wird.

2. Befestigungselement (1) nach Anspruch 1, **dadurch gekennzeichnet, dass** der Durchmesser D2 des zweiten Schaftteils (14) 0,5- bis 0,9-mal so groß ist wie der Durchmesser D1 des ersten Schaftteils (13).

3. Befestigungselement (1) nach einem der vorhergehenden Ansprüche, **dadurch gekennzeichnet, dass** der erste Schaftteil (13) länger ist als der zweite Schaftteil (14).

4. Befestigungselement (1) nach einem der vorhergehenden Ansprüche, **dadurch gekennzeichnet, dass** der erste Schaftteil (13) einen Bereich (16) mit geriffelter Struktur aufweist.

5. Befestigungselement (1) nach einem der vorhergehenden Ansprüche, **dadurch gekennzeichnet, dass** zusammen der Bereich (16) mit geriffelter Struktur des ersten Schaftteils (13), der zweite Schaftteil (14) und die Spreizelementspitze (17) in etwa so lang sind wie die Spreizzone (26).

6. Befestigungselement (1) nach einem der vorhergehenden Ansprüche, **dadurch gekennzeichnet, dass** der Druckteller (21) eine umlaufende Aussparung (23) für einen korrespondierenden umlaufenden Rand (18) am Spreizelementkopf (11) aufweist.

7. Befestigungselement (1) nach einem der vorhergehenden Ansprüche, **dadurch gekennzeichnet, dass** sich an die umlaufende Aussparung (23) im Druckteller (21) eine Kammer (22) zur Aufnahme des Spreizelementkopfs (11) anschließt.

8. Verfahren zur Montage eines Dämmstoffs (2) an einer Unterkonstruktion (4) mit einem Befestigungselement (1) nach Anspruch 1, welches die folgenden Schritte aufweist:
(a) Bohren eines Bohrlochs (5) durch den Dämmstoff (2) und in die Unterkonstruktion (4);
(b) Einstecken des Befestigungselements (1) in das Bohrloch (5), bis zur Auflage des Drucktellers (21) auf dem Dämmstoff (2);
(c) Eintreiben des Spreizelements (10) unter axialer Vorspreizung der Spreizzone (26) durch den zweiten Schafteil (14) mit dem Durchmesser D2;
(d) weiteres Eintreiben des Spreizelements (10) und maximale Aufspreizung der Spreizzone (26) durch den ersten Schaftteil (13) mit dem Durchmesser D1.

9. Verfahren nach Anspruch 8, wobei am Ende von Schritt d) die Dübelhülse (25) genau so weit im Bohrloch (5) steckt wie in der Vormontageposition gemäß Schritt b).
